**Europäisches Patentamt**

**European Patent Office**

**Office européen des brevets**

(19)

(11) Numéro de publication: **0 097 579**
**B1**

(12) FASCICULE DE BREVET EUROPEEN

(51) Int. Cl.⁴: **H 04 B 7/26, H 04 L 1/08**

(45) Date de publication du fascicule du brevet:
**23.04.86**

(21) Numéro de dépôt: **83401224.7**

(22) Date de dépôt: **14.06.83**

(54) Système de radiocommunications à sauts de fréquence, à redondance inter-paliers.

(30) Priorité: **18.06.82 FR 8210709**

(43) Date de publication de la demande:
**04.01.84 Bulletin 84/1**

(45) Mention de la délivrance du brevet:
**23.04.86 Bulletin 86/17**

(84) Etats contractants désignés:
**DE GB IT**

(56) Documents cités:
**GB - A - 2 052 217**
**US - A - 4 066 964**

(73) Titulaire: **THOMSON-CSF, 173, Boulevard Haussmann, F-75379 Paris Cedex 08 (FR)**

(72) Inventeur: **Butin, Henri, THOMSON-CSF SCPI 173, bld Haussmann, F-75379 Paris Cedex 08 (FR)**
Inventeur: **Deman, Pierre, THOMSON-CSF SCPI 173, bld Haussmann, F-75379 Paris Cedex 08 (FR)**

(74) Mandataire: **Turlèque, Clotilde et al, THOMSON-CSF SCPI 19, avenue de Messine, F-75008 Paris (FR)**

ACTORUM AG

## Description

L'invention se rapporte aux systèmes de radio-communications assurant la liaison entre des abonnés, éventuellement, mobiles, et une ou plusieurs stations centrales fixes sur des canaux à sauts de fréquence, et plus particulièrement à un système de ce type dans lequel l'information est transmise de manière redondante sur les paliers successifs de la loi de sauts de fréquence caractérisant la liaison.

Dans un système où les liaisons se font sur des canaux à sauts de fréquence, une loi de sauts de fréquence peut être affectée à chaque mobile. Les lois des différents mobiles d'un même continuum espace-temps-fréquence sont indépendantes mais changent de valeurs simultanément et les valeurs des fréquences sont choisies dans un même ensemble de fréquences prédéterminé. L'émission se fait sur des paliers de fréquence séparés les uns des autres par des temps morts qui facilitent les changements de fréquences.

Dans un tel système, il existe un brouillage intrinsèque résultant d'une émission simultanée sur la même fréquence par deux émetteurs du réseau, lorsque les lois de sauts de fréquence correspondant à ces deux liaisons se recoupent sur un palier déterminé; le récepteur associé peut alors détecter, si aucune précaution supplémentaire n'est prise et si le niveau du brouilleur est supérieur au niveau de la liaison en cours, des données transmises par un émetteur qui ne lui est pas associé.

Il est donc nécessaire dans un tel système de prévoir des moyens assurant la continuité de la transmission pour que les données détectées correspondent à une même communication, les données reçues qui ne correspondent pas à la communication en cours étant supprimées.

Cette suppression peut se faire par paliers entiers puisque le brouillage intrinsèque se fait par paliers entiers, tous les paliers étant émis dans le système en synchronisme. Le brevet US 4 066 964 décrit un système de transmission à sauts de fréquence avec une redondance d'ordre 3 et qui n'exploite pas cette particularité du brouillage intrinsèque. Ce système antérieur comporte, à l'émission, des moyens pour transmettre chaque mot binaire A, B, C, D, E, etc. d'un message en trois exemplaires $A_1$, $A_2$, $A_3$, $B_1$, $B_2$, $B_3$, etc., chaque palier de la fréquence d'émission transmettant 3 exemplaires différents. La suite de 5 mots A, B, C, D, E est transmise sous la forme suivante:

| palier: | n° 1 | n° 2 | n° 3 | n° 4 | n° 5 |
|---|---|---|---|---|---|
| données: | --$A_1$ | -$A_2B_2$ | $A_3B_2C_1$ | $B_3C_2D_1$ | $C_3D_2E_1$ |

Le ystème antérieur comporte, à la réception, des moyens pour déterminer une valeur du rapport signal sur bruit pour chaque exemplaire de chaque mot; par exemple pour les exemplaires $C_1$, $C_2$, $C_2$ du mot C; et pour determiner successivement la valeur de chaque bit de chaque mot, par une décision majoritaire prenant en compte les 3 valeurs reçues pour le bit considéré et en pondérant ces valeurs en fonction des 3 valeurs du rapport signal sur bruit. Ces moyens sont donc relativement complexes et surtout nécessitent une redondance d'ordre 3 pour pouvoir faire une décision majoritaire.

L'invention a pour objet un système de radiocommunications dans lequel une redondance inférieure à 3 permet de réduire la sensibilité au brouillage intrinsèque et d'assurer simultanément la continuité de la transmission lors d'une communication, et dans lequel la validité des données est appréciée globalement pour chaque palier.

Suivant l'invention, un système de radiocommunications à sauts de fréquence dans lequel une liaison entre une station abonnée, éventuellement mobile, et une station centrale est effectuée dans un canal à sauts de fréquence suivant une loi associée à la station abonnée et variant par sauts sur des paliers successifs de durée prédéterminée, les lois de fréquence associées aux différentes stations abonnées étant indépendantes mais utilisant un ensemble commun de fréquences, les paliers d'émission étant synchrones pour l'ensemble du système et l'information à transmettre étant numérisée; la partie émission d'une station quelconque comportant un circuit d'entrée permettant la compression de paquets de données numérisées, un circuit de traitement pour le calcul et l'insertion dans la suite des données numériques à transmettre, de données de redondance; la partie réception d'une station comportant un circuit à mémoire couplé à la sortie d'un démodulateur, un circuit de validation et de transfert des paquets de données démodulées et un circuit de sortie couplés au circuit à mémoire;

est caractérisé en ce que le circuit de traitement pour le calcul et l'insertion de données de redondance comporte des moyens pour insérer des données de redondance correspondant à un palier, parmi les données à transmettre correspondant à un autre palier;

et en ce que le circuit de validation et de transfert comporte des moyens pour comparer des données démodulées avec des données redondantes qui leur correspondent et décider globalement pour chaque palier, de la validité de toutes les données transmises pendant ce palier.

L'invention sera mieux comprise et d'autres caractéristiques apparaîtront à l'aide de la description qui suit en référence aux figures annexées.

La fig. 1 est un schéma synoptique d'un ensemble émission-réception pour une station du système de radiocommunications suivant l'invention;

la fig. 2 représente un mode de réalisation de la partie émission d'une station du système de radiocommunications pour un premier mode de fonctionnement;

la fig. 3 est un diagramme de signaux illustrant ce premier mode de fonctionnement du système selon l'invention;

la fig. 4 représente un mode de réalisation de la partie réception d'une station du système de radiocommunications pour ce premier mode de fonctionnement;

la fig. 5 est un diagramme de signaux illustrant un second mode de fonctionnement du système suivant l'invention.

Dans un système de radiocommunications du type décrit ci-dessus, les messages à transmettre se présentent sous forme des données numériques groupées par paquets formés par une séquence de paliers en nombre variable; chaque palier correspond à une émission brève sur une porteuse de fréquence déterminée, modulée par les éléments binaires d'information à transmettre. Entre les paliers, des temps morts sont prévus pour faciliter le positionnement du synthétiseur en vue des changements de fréquences porteuses des paliers.

Lors d'une transmission, le premier palier d'une séquence peut être codé d'une manière particulière pour identifier un début de sequence. Par la suite, au cours de la transmission, il est nécessaire de pouvoir reconnaître si les paliers suivants appartiennent ou non à la séquence. Suivant l'invention, lors de l'émission, les données utiles sont transmises avec une redondance qui répartit l'information sur plusieurs paliers successifs, entraînant un accroissement du débit utile proportionnel à la redondance introduite.

A la réception, la démodulation est effectuée en utilisant les signaux reçus sur l'ensemble des paliers sur lesquels l'information est reportée, en comparant les résultats de démodulation obtenus pour les différentes combinaisons possibles de paliers, un palier étant retenu comme appartenant à la séquence lorsque les résultats des différentes comparaisons ont permis de le valider.

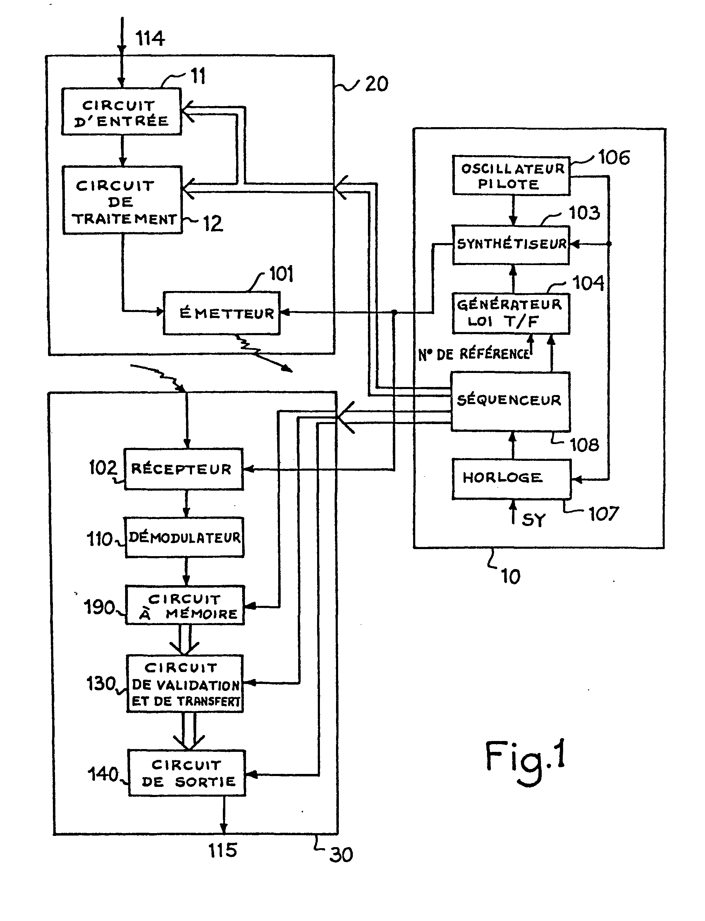

La fig. 1 est un schéma synoptique d'un ensemble émission-réception pour une station fixe ou mobile du système. Il comporte une partie émission 20, une partie réception 30 et un ensemble de circuits communs émissions-réception 10.

Les circuits communs émissions-réception 10 de la station comportant un générateur de lois de sauts de fréquence, loi T/F, 104, commandé par une sortie d'un circuit séquenceur 108. La loi de sauts de fréquence générée par le générateur 104 est déterminée à partir du numéro de référence d'un abonné mobile. Pour une station mobile, ce numéro de référence est propre à la station et fixé. Pour une station fixe ce numéro de référence est variable et égale au numéro du mobile appelé, une loi de sauts de fréquence particulière étant affectée à chaque mobile et suivie par la station fixe établissant la liaison. La sortie de ce générateur de lois temps-fréquence est reliée à une entrée de commande d'un synthétiseur de fréquences 103 recevant par ailleurs d'un oscillateur pilote 106 la fréquence de base. Cet oscillateur 106 commande également une horloge 107 ayant une entrée de commande de synchronisation SY. Dans un mode de réalisation du système de radiocommunications suivant l'invention, la synchronisation de l'horloge 107 de la station est réalisée par une commande extérieure pour les stations fixes et à partir des données reçues pour les stations mobiles. La sortie de cette horloge 107 est reliée à l'entrée du circuit séquenceur 108.

La sortie du synthétiseur 103 délivre donc pour chaque palier de la loi temps-fréquence en cours une fréquence porteuse différente caractéristique du mobile et de l'heure du réseau.

La partie émission 20 comporte une entrée de signal à transmettre 114, un circuit d'entrée 11 dont la sortie fournit le signal à transmettre sous forme numérique et un circuit de traitement 12 en série, tous deux commandés par le circuit séquenceur 108 de l'ensemble de circuits communs émission-réception. Le circuit de traitement 12 est tel que des données numériques de redondance, déterminées à partir des données numériques à transmettre sur les paliers successifs, sont insérées dans la suite des données numériques à transmettre. Pour cela la suite des données est comprimée dans un rapport fonction de la durée du temps mort interpaliers et du taux de redondance introduit. Les données numériques de redondance sont insérées dans la suite des données à transmettre de façon que, lors de la transmission sur des paliers successifs, ces données de redondance et les données numériques ayant servi de base au calcul de ces données de redondance soient transmises sur des paliers différents. Les données numériques de redondance peuvent être les données numériques à transmettre elles-mêmes, comme décrit en détails ci-après dans un premier mode de réalisation du système, une combinaison logique de plusieurs groupes de données, ou des éléments binaires de redondance calculés à partir des données à transmettre par un code détecteur et correcteur d'erreurs, par exemple un code de Reed Solomon. La sortie du circuit de traitement est reliée à l'entrée de l'émetteur 101 qui reçoit par ailleurs du synthétiseur 103 les fréquences porteuses pour les paliers d'émission successifs.

La partie réception 30 comporte un récepteur 102, qui reçoit les signaux modulés commandés par le synthétiseur de fréquences 103. La sortie du récepteur 102 est reliée à l'entrée d'un démodulateur 110 qui fournit la suite des données numériques démodulées. Ces données sont transmises à un circuit à mémoire 190 ayant une entrée de commande reliée à la sortie du séquenceur 108, dont la capacité est suffisante pour que des données de redondance et les données numériques ayant servi de base au calcul de ces données de redondance soient présentes simultanément dans ce circuit à mémoire. Les sorties de ce circuit à mémoire sont reliées aux entrées d'un circuit logique de validation et de commande de transfert, 130. Ce circuit traite les données reçues et autorise le transfert d'un groupe de données transmises sur un palier lorsque la comparaison de ces données avec les données numériques de redondance correspondantes transmises sur un autre palier entraine la validation de ce groupe de données. Les données sont alors transférées à un circuit de sortie 140 qui les restitue à leur rythme normal.

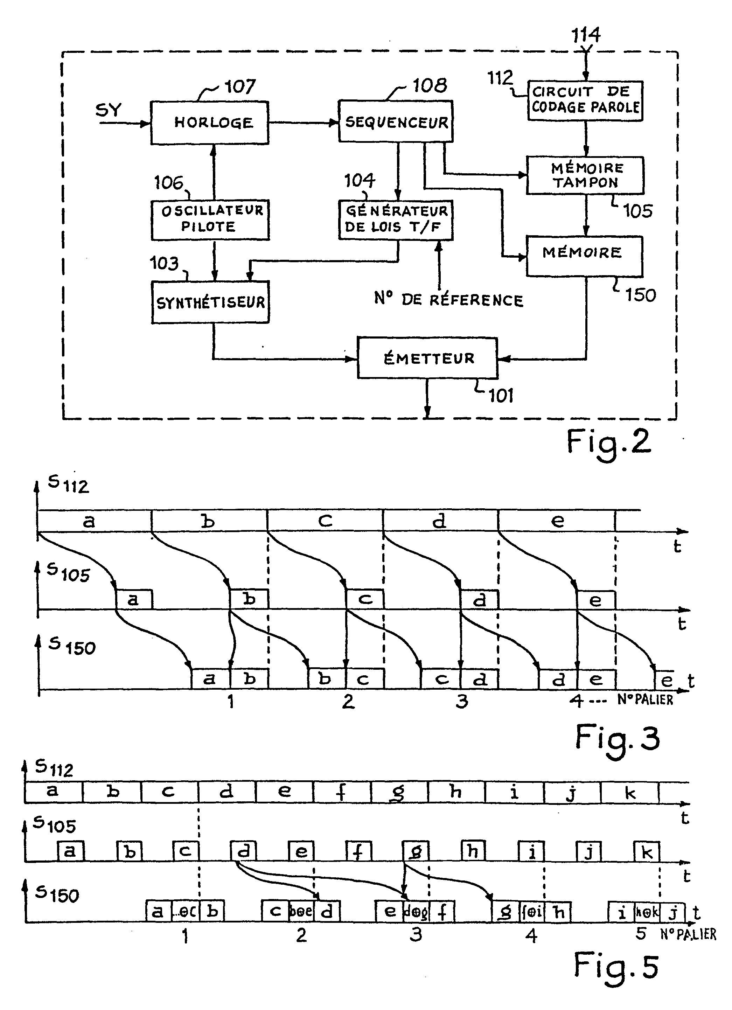

La figure 2 représente plus en détail un premier mode de réalisation de la partie émission, avec les circuits communs, d'une station suivant l'invention, cette station pouvant être une station fixe ou une station mobile. Pour la transmission d'un signal de parole, l'entrée 114 de ce circuit d'émission reçoit un signal analogique. Le circuit d'entrée est un circuit de codage de parole 112 qui délivre le signal de parole sous forme numérique codée. Le circuit de traitement 12 (fig. 1) comporte une mémoire tampon 105, la sortie des échantillons mis en mémoire dans ce circuit étant commandé par le circuit séquenceur 108. Dans le cas de transmission de données numériques celles-ci sont directement utilisables dans la mémoire tampon 105. La sortie de cette mémoire tampon est reliée à l'entrée d'une seconde mémoire 150 dont la sortie fournit les données à l'entrée de l'émetteur 101. Cette mémoire 150 est commandée par le séquenceur 108, et les données délivrées par sa sortie sont constituées des paquets de données comprimées à la sortie de la mémoire 105, répétées sur deux paliers successifs dans ce premier mode de fonctionnement.

La fig. 3 illustre ce premier mode de redondance inter-paliers. La commande de transfert de la mémoire tampon 105 dans la mémoire 150 et la sortie des données de la mémoire 150 sont commandées par le circuit séquenceur 108 selon le diagramme des temps représenté sur la fig. 3. Sur cette figure, le signal $S_{112}$ est le signal de sortie du circuit de codage de parole, les données ayant été fictivement séparées en paquets a, b, c, d, e ... Ces données sont transférées à la mémoire tampon au fur et à mesure qu'elles sont obtenues. Par contre, leur sortie de la mémoire 105 se fait à un rythme plus élevé, correspondant à une compression du paquet. Dans l'exemple représenté sur la fig. 3 le rythme de sortie des données de la mémoire 105 est trois fois celui des données sortant du circuit de codage de parole. Dans cet exemple, la sortie de la mémoire 150 fournit un signal ayant une redondance de 2, les données étant transmises deux fois par la mémoire 150, la première fois sur la fin d'un palier d'émission, la seconde fois sur le début du palier d'émission suivant. Dans l'ensemble représenté sur la fig. 3, le palier d'émission a une durée double du temps mort interpaliers. C'est ce qui nécessite une compression de données par trois au niveau de la mémoire tampon 105. A titre d'exemple, les éléments binaires utiles peuvent remplir la mémoire 105 à la vitesse V = 16K bits/seconde. Cette mémoire se vide à vitesse triple soit 48 K bits/seconde dans la mémoire 150 qui dans cet exemple peut être simplement une mémoire «premier entré-premier sorti». La durée utile d'un palier peut être égale à deux millisecondes, le temps mort séparant deux paliers successifs étant égal à une milliseconde. L'ordre de sortie donné par le séquenceur 108 est donné deux fois de suite dans la période du palier, soit trois millisecondes, le nombre d'éléments binaires d'un paquet étant le nombre d'éléments binaires à 16 K bits correspondant à trois millisecondes, soit 48 éléments binaires dans un paquet, et 96 éléments binaires sur chaque palier.

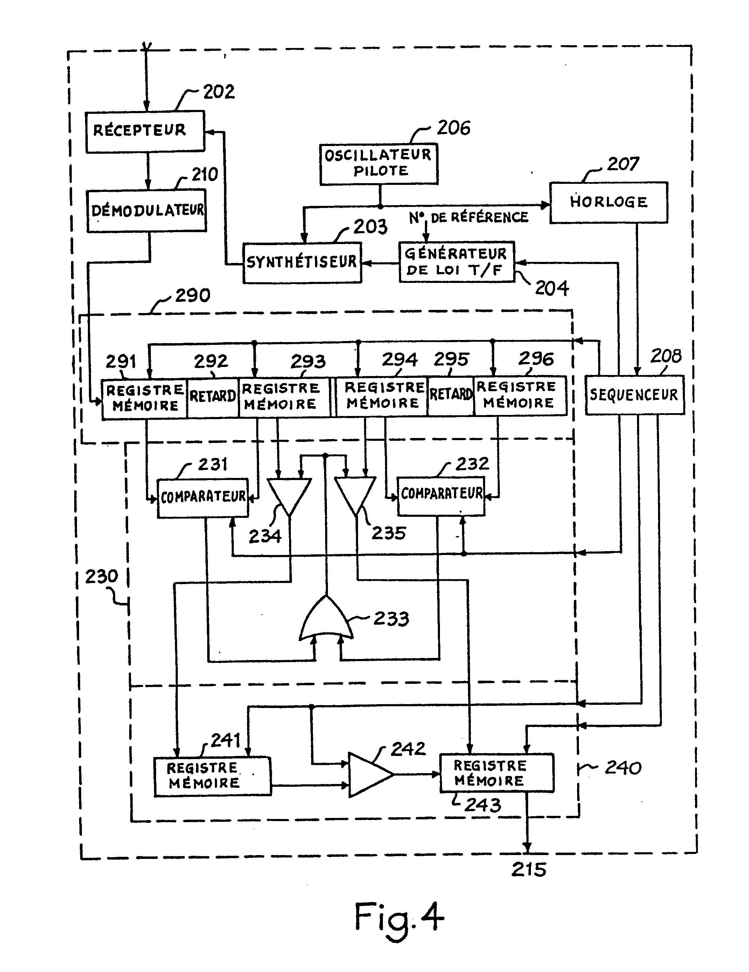

La fig. 4 représente la partie réception de la station correspondante du système de radiocommunications suivant l'invention. Les références des éléments ont été augmentées de 100 par rapport aux éléments analogues de la fig. 1.

Le récepteur 202 reçoit le signal à la fréquence porteuse des paliers successifs modulés par les éléments binaires de données. Ce récepteur a une entrée de fréquence porteuse issue d'un synthétiseur 203 commandé par un générateur de loi temps-fréquence 204 établissant la même loi que celle établie par la station correspondante en communication. Pour cela le générateur de lois temps-fréquence reçoit le même numéro de référence associé à l'abonné mobile en communication, et le signal de commande d'un séquenceur 208 assurant le fonctionnement en synchronisme avec la station d'émission. Les circuits de type connus assurant ce synchronisme ne sont pas représentés. Le synthétiseur 203 est commandé comme précédemment par un oscillateur pilote 206 commandant également une horloge 207 dont la sortie est reliée à l'entrée du circuit séquenceur 208. La sortie du récepteur 202 est reliée à l'entrée du démodulateur 210 dont la sortie est reliée au circuit à mémoire 290. Ce circuit à mémoire 290 comporte en série un premier registre mémoire 291 ayant une capacité correspondant à la moitié d'un palier, soit 48 cases mémoires, un registre intermédiaire de même capacité 292 correspondant au temps mort entre deux paliers successifs, un second et un troisième registre mémoire 293 et 294 de même capacité, un second registre intermédiaire 295 de même capacité correspondant au temps mort entre paliers, et un quatrième registre mémoire 296 de même capacité.

Les données issues du démodulateur sont transmises à l'entrée du registre mémoire 291 et décalées successivement par transfert dans les registres mémoires 291 à 296. Lorsque le dernier élément binaire d'un paquet transmis pour la seconde fois est mis en mémoire dans le registre 291, le registre 293 comporte en l'absence de perturbation le même paquet d'éléments binaires, et les registres 294 et 296 comportent les éléments binaires correspondant au paquet précédent.

Les sorties des registres de la mémoire tampon 290 sont reliées à un circuit de validation 230: Les sorties des registres mémoires 291 et 293 sont reliées aux entrées d'un comparateur 231; de la même manière les sorties des registres mémoires 294 et 296 sont reliées aux entrées d'un comparateur 232. Lorsque les contenus des registres 291 et 293 sont semblables ou lorsque les contenus des registres 294 et 296 sont semblables, les comparateurs 231 et 232 délivrent respectivement des ordres de validation des paquets correspondants transmis sur le palier entier contenu dans les registres 293 et 294. En effet cette coïncidence signifie que le démodulateur 210 a bien capté les données correspondant à la liaison en cours et non les données transmises sur un palier de même fréquence émis par une autre station du système, extérieure à la communication en cours, car la probabilité de brouillage intrinsèque de deux paliers successifs par une même station perturbatrice est très faible. A l'inverse, si un paquet de données démodulées capté sur un palier de fréquence ne coïncide pas avec le paquet de données correspondant de la fin du palier précédent ou du début du palier suivant, l'un des deux paliers a été brouillé et les données captées l'ont été en provenance d'une station perturbatrice et non en provenance de la station en cours de communication. Dans ce cas, l'ordre de validation pour le paquet correspondant n'est pas donné par le comparateur correspondant. Cependant, la validation de l'un des deux paquets de données du palier contenu dans les registres 293 et 294 entraine celle de l'autre moitié et c'est le palier précédent ou suivant qui n'est pas validé. Aussi, cette redondance inter-paliers permet de corriger totalement une perturbation d'un palier de la séquence si un des paliers précédent et suivant a été reçu. Pour cela, les sorties de validation des comparateurs 231 et 232 sont reliées aux deux entrées d'une porte OU 233 dont la sortie est reliée aux premières entrées de deux portes de transfert 234 et 235 recevant sur leurs deuxièmes entrées respectivement les données à la sortie du registre mémoire 293 et les données à la sortie du registre mémoire 294.

Les sorties des portes de transfert 234 et 235 sont reliées à un circuit de sortie à mémoire 240 et plus précisément aux entrées de registres mémoires 241 et 243. Lors de la validation d'un palier, ces registres mémoires 241 et 243 reçoivent respectivement la fin du palier et le début de ce même palier, c'est-à-dire deux paquets de données successifs. Chacun de ces registres mémoires a une entrée de commande de transfert reliée à une sortie correspondante du circuit séquenceur 208. Les données présentes dans le registre mémoire 243 à la suite d'une validation sont transférées à la sortie 215 du circuit de réception au rythme des données non comprimées c'est-à-dire dans l'exemple décrit ci-dessus à 16 K bit/seconde. Dans une séquence de paliers validés, les paquets de données transférés à la sortie 215 via le registre mémoire 243 correspondent à tous les débuts de paliers.

Lorsque le début du palier c'est-à-dire les données correspondant au premier paquet ont été transmises et que le palier suivant n'a pas été validé, le premier paquet du palier suivant n'a pas été transféré au registre mémoire 243 qui est alors vide. Le séquenceur commande alors le transfert des données présentes dans le registre mémoire 241 au registre mémoire 243. Les données correspondant au second paquet du palier précédent validé sont alors transmises de la même manière à la sortie du circuit de réception au rythme des données non comprimées c'est-à-dire à 16 K bits/seconde. Pour ce transfert, une porte de transfert 242 a une entrée reliée à la sortie du registre mémoire 241 et l'autre entrée reliée à la sortie correspondante du séquenceur 208.

En l'absence de validation, aucune donnée du palier non validé n'est transmise à la sortie 215 du circuit de réception.

Pour le bon fonctionnement du dispositif, il est indispensable que l'ordre de transfert donné par le séquenceur 208 du contenu du registre 241 dans le registre 243 coïncide, à un décalage en retard très petit devant la durée d'un élément binaire, avec l'ordre de comparaison et de transfert donné par le séquenceur 208 aux comparateurs 231 et 232. Cet ordre de comparaison et de transfert doit lui-même suivre d'un décalage petit devant la durée binaire, l'ordre d'entrée du dernier bit de la première moitié d'un palier dans le registre mémoire 291. Les registres mémoires utilisés peuvent avantageusement être des circuits à transfert de charges permettant, en tenant compte de la redondance, de prendre la meilleure décision. Lors du transfert du contenu du registre mémoire 241 dans le registre mémoire 243, le registre 241 est remis à une valeur neutre entre 0 et 1, soit 1/2, ce qui permet de ne pas tenir compte du contenu de ce registre mémoire en l'absence de validation sur plusieurs paliers successifs. Le registre 243 est initialisé par le transfert du contenu du registre 241. En transmission de garde, la valeur 1/2

peut être transformée en un roulement de code delta par un étage astatique prévu à la sortie de la mémoire 243 et commandé par l'horloge. Si le contenu de la mémoire au lieu d'être 1/2 présente un écart significatif par rapport à cette valeur c'est le bit 1 ou 0 correspondant à cet écart qui est transmis. Dans le cadre de la transmission de données, la valeur 1/2 peut être transmise pour permettre l'effacement, l'information acquise au cours du palier dans une décision pondérée ultérieure tenant compte de la redondance inter-paliers.

La fig. 5 représente un second mode de transmission de données avec une redondance inter-paliers égale à 1,5 au lieu de 2 dans l'exemple précédent. Pour établir cet exemple, les durées des paliers ont été choisies égales à celles choisies dans l'exemple précédent, c'est-à-dire que la durée du palier est deux fois celle du temps mort inter-paliers, deux millisecondes et une milliseconde respectivement par exemple. Dans cet exemple, la durée utile d'un palier est divisée en trois, les données étant réparties à la suite dans les parties initiales et finales des paliers, les parties médianes des paliers étant la somme bit à bit modulo 2 des données de la partie finale du palier précédent et de la partie initiale du palier suivant. Les données à la sortie du circuit de codage de parole $S_{112}$ sont groupées fictivement en paquets de 24 bits. Ces données sont comprimées lors de leur sortie de la mémoire 105 de façon que chaque paquet de 24 bits puisse être transmis pendant un tiers de la durée utile d'un palier soit 2/3 de milliseconde. Ainsi les données des paquets a et b sont transmises au début et à la fin du palier n° 1, les paquets c et d sont transmis au début et à la fin du paquet n° 2, les paquets de données e et f sont transmis au début et à la fin du palier n° 3 etc. Dans les parties médianes des paliers sont transmises, comme indiqué ci-dessus, les sommes bit à bit modulo 2 des données de la partie finale du palier précédent et de la partie initiale du palier suivant, soit les données du paquet b plus les données du paquet e dans la partie médiane du palier n° 2, la somme bit à bit modulo 2 des paquets d et g dans la partie médiane du palier n° 3 etc. ...

Lors de la réception, les données démodulées sont traitées par un circuit de validation et de transfert.

Pour la validation d'un paquet de rang n, la somme du dernier paquet du palier précédent et du premier paquet du palier suivant est effectuée et comparée aux données présentes dans le deuxième tiers du paquet à valider.

S'il y a coïncidence, le palier de rang n est validé et les paquets de données contenus du premier et du dernier tiers de palier sont transférés au circuit de sortie 240 qui les transmet à la sortie 215 du récepteur au rythme des données non comprimées, soit à 16 K bits/seconde.

S'il n'y a pas coïncidence, le palier de rang n n'est pas validé. Il est alors possible de reconstituer l'information à transmettre à partir des deux paliers précédents ou des deux paliers suivants, dans la mesure où ces paliers auront été validés.

La redondance introduite dans cet exemple est inférieure à celle introduite dans le premier exemple décrit en détails ci-dessus, aussi il n'est possible de rendre insensible l'absence complète d'un palier que si le deux paliers précédents et les deux paliers suivants ont été correctement démodulés.

Dans les deux cas le débit des données à transmettre garde une valeur telle que les problèmes de synchronisation, de durée de trajet et de trajets multiples peuvent être résolus par des moyens classiques analogues à ceux utilisés pour les radiocommunications sur des canaux à fréquences banalisées mais fixes pour une communication.

L'invention n'est pas limitée à ce qui à été précisément décrit ci-dessus. En particulier tout type de code redondant présentant une capacité d'autocorrection peut être utilisé pourvu que la redondance soit placée sur un palier distinct de ceux contenant les informations sur lesquelles celle-ci a été calculée.

## Revendications

1. Système de radiocommunications à sauts de fréquence dans lequel une liaison entre une station abonnée, éventuellement mobile, et une station centrale est effectuée dans un canal à sauts de fréquence suivant une loi associée à la station abonnée et variant par sauts sur des paliers successifs de durée prédéterminée, les lois de fréquence associées aux différentes stations abonnées étant indépendantes mais utilisant un ensemble commun de fréquences, les paliers d'emission étant synchrones pour l'ensemble du système et l'information à transmettre étant numérisée; la partie émission d'une station quelconque comportant un circuit d'entrée (11) permettant la compression de paquets de données numérisées, un circuit de traitement (12) pour le calcul et l'insertion dans la suite des données numériques à transmettre, de données de redondance; la partie réception d'une station comportant un circuit à mémoire (190) couplé à la sortie d'un démodulateur (110), un circuit de validation et de transfert (130) des paquets de données démodulées, et un circuit de sortie (140) couplés au circuit à mémoire (190);

caractérisé en ce que le circuit de traitement (12) pour le calcul et l'insertion de données de redondance comporte des moyens (105, 108, 150) pour insérer des données de redondance correspondant à un palier, parmi les données à transmettre correspondant à un autre palier;

et en ce que le circuit de validation et de transfert (130) comporte des moyens (208, 290, 230, 240) pour comparer des données démodulées avec des données redondantes qui leur correspondent et décider, globalement pour chaque palier, de la validité de toutes les données transmises pendant ce palier.

2. Système selon la revendication 1, caractérisé en ce que, à l'émission, chaque paquet de données comprimées est transmis successivement dans la seconde moitié d'un premier palier et est transmis de nouveau, après un temps mort inter-paliers, dans le première moitié du palier suivant, la redondance étant égale à 2, et en ce que, à la réception, toutes les données transmises pendant un palier donné sont validés lorsque les données démodulées de l'une au moins des deux moitiés de ce palier coïncident avec les données démodulées de la seconde moitié du palier précédent ou de la première moitié du palier suivant.

3. Système selon la revendication 2, caractérisé en ce que le circuit à mémoire (290) de la partie réception comporte quatre registres mémoires (291, 293, 294, 296) pour la mise en mémoire des données démodulées d'une moitié de palier, respectivement la première moitié du palier suivant, les deux moitiés du palier à valider, et la seconde moitié du palier précédent, et en ce que le circuit de validation comporte deux comparateurs (231, 232) pour comparer les contenus des registres (291, 293, 294, 296) et valider le transfert des données lorsque la coïncidence est suffisante entre les contours d'au moins deux registres (291, 293, 294, 296).

4. Système selon la revendication 1, caractérisé en ce que, à l'émission, les paquets de données comprimées sont transmis successivement dans les premiers et derniers tiers de chacun des paliers utiles d'émission, le tiers central d'un palier donné transmettant la somme élément binaire à élément binaire, modulo 2, des paquets de données transmis respectivement dans le dernier tiers du palier précédent et dans le premier tiers du palier suivant, la redondance étant égale à 1,5; et en ce que, à la réception, un palier donné est validé lorsque la somme modulo 2 des données démodulées transmises dans le dernier tiers du palier précédent et dans le premier tiers du palier suivant coïncide avec les données démodulées transmises dans le tiers central du palier donné.

## Patentansprüche

1. Mit Frequenzsprung arbeitendes Funkverbindungssystem, bei welchem eine Verbindung zwischen einer Teilnehmerstation, die beweglich sein kann, und einer Zentralstation in einem Frequenzsprung-Kanal nach einem Gesetz erfolgt, welches der Teilnehmerstation zugeordnet ist und sprungweise auf aufeinanderfolgenden Stufen vorbestimmter Dauer variiert, wobei die den verschiedenen Teilnehmerstationen zugeordneten Frequenzgesetze voneinander unabhängig sind, jedoch von einer gemeinsamen Gruppe von Frequenzen Gebrauch machen, wobei die Sendestufen für die Gesamtheit des Systems synchron sind und die zu übertragende Information digitalisiert ist; wobei der Sendeteil einer beliebigen Station eine Eingangsschaltung (11) umfasst, welche die Kompression von digitalisierten Datenpaketen gestattet, une eine Verarbeitungsschaltung (12) zur Berechnung von Redundanzdaten und zur Einfügung derselben in die Folge von zu übertragenden Digitaldaten enthält; während der Empfangsteil einer Station eine an einen Ausgang eines Demodulators (110) angekoppelte Speicherschaltung (190), eine Freigabe- und Überführungsschaltung (130) für demodulierte Datenpakete und eine Ausgangsschaltung (140) enthält, welche an die Speicherschaltung (190) angekoppelt sind;

dadurch gekennzeichnet, dass die Verarbeitungsschaltung (12) zur Berechnung der Redundanzdaten und Einfügung derselben Mittel (105, 108, 150) umfasst, um einer Stufe entsprechende Redundanzdaten zwischen den zu übertragenden Daten einzufügen, die einer anderen Stufe entsprechen;

und dass die Freigabe- und Überführungsschaltung (130) Mittel (208, 290, 230, 240) umfasst, um die demodulierten Daten mit den redundanten Daten zu vergleichen, welche ihnen entsprechen, und global für jede Stufe über die Gültigkeit aller während dieser Stufe übertragenen Daten zu entscheiden.

2. System nach Anspruch 1, dadurch gekennzeichnet, dass beim Sendebetrieb jedes Paket komprimierter Daten sukzessiv in die zweite Hälfte einer ersten Stufe überführt wird und erneut nach einer zwischen den Stufen liegenden Totzeit in der ersten Hälfte der darauffolgenden Stufe übertragen wird, wobei die Redundanz gleich 2 ist, und dass beim Empfang alle während einer gegebenen Stufe übertragenen Daten freigegeben werden, wenn die demodulierten Daten wenigstens einer der zwei Hälften dieser Stufe übereinstimmen mit den demodulierten Daten der zweiten Hälfte der vorausgehenden Stufe oder der ersten Hälfte der nachfolgenden Stufe.

3. System nach Anspruch 2, dadurch gekennzeichnez, dass die Speicherschaltung (290) des Empfangsteils vier Speicherregister (291, 293, 294, 296) zur Einspeicherung der demodulierten Daten einer Stufenhälfte umfasst, nämlich der ersten Hälfte der nachfolgenden Stufe bzw. der zwei Hälften der freizugebenden Stufe bzw. der zweiten Hälfte der vorausgehenden Stufe, und dass die Freigabeschaltung zwei Komparatoren (231, 232) umfasst, um die Inhalte der Register (291, 293, 294, 296) zu vergleichen und die Überführung der Daten freizugeben, wenn die Übereinstimmung zwischen den Konturen von wenigstens zwei Registern (291, 293, 294, 296) ausreicht.

4. System nach Anspruch 1, dadurch gekennzeichnet, dass beim Sendebetrieb die Pakete von komprimierten Daten sukzessiv in die ersten und letzten Drittel jeder der nutzbaren Sendestufen überführt werden, wobei das mittlere Drittel einer gegebenen Stufe Binärelement für Binärelement die Summe Modulo 2 der Datenpakete überträgt, welche im letzten Drittel der vorausgehenden Stufe bzw. in dem ersten Drittel der nachfolgenden Stufe übertragen werden, wobei die Redundanz gleich 1,5 ist; und dass empfangsseitig eine gegebene Stufe freigegeben wird, wenn die Summe Modulo 2 der demodulierten Daten, welche im letzten Drittel der vorausgehenden Stufe und im ersten Drittel der nachfolgenden Stufe übertragen wurden, mit den demodulierten Daten übereinstimmt, welche in dem mittleren Drittel der gegebenen Stufe übertragen wurden.

**Claims**

1. Frequency jumping radio-communications system wherein a connection between an eventually mobile subscribers station and a central station is performed in a frequency jumping channel in accordance with a law associated with the subscribers station and varying stepwise on successive levels of predetermined durations, the frequency laws associated with the different subscribers stations being independent but using a common set of frequencies, the transmission steps being synchronized for the entire system and the information to be transmitted being digitalized; the transmission portion of any station comprising an input circuit (11) permitting the compression of digitalized data blocks, a processing circuit (12) for computing redundancy data and inserting them among the sequence of digital data to be transmitted; the reception portion of a station comprising a memory circuit (190) coupled to the output of a demodulator (110), an enabling and transfer circuit (130) for blocks of demodulated data and an output circuit (140), coupled to the memory circuit (190);

characterized in that the processing circuit (12) for computing and in serting redundancy data comprises means (105, 108, 150) for inserting redundancy data corresponding to a step among the data to be transmitted corresponding to another step;

and in that the enabling and transfer circuit (130) comprises means (208, 290, 230, 240) for comparing the modulated data with redundancy data corresponding thereto and deciding, as a whole for each step, on the validity of all of the data transmitted during this step.

2. System according to claim 1, characterized in taht, upon transmission, each block of compressed data is transmitted successively in the second half of a first step and is transmitted again after an inter-step dead time in the second half of the first step, the redundancy being equal to 2, and in that, upon reception, all of the data transmitted during a given step are validated when the demodulated data of at least one of the two halves of this step match with the demodulated data of the second half of the preceding step or of the first half of the following step.

3. System according to claim 2, characterized in that the memory circuit (290) of the reception portion comprises four memory registers (291, 293, 294, 296) for storing the demodulated data of one half of a step, i.e. the first half of the following step, the two halves of the step to be validated and the second half of the preceding step, respectively, and in that the validation circuit comprises two comparators (231, 232) for comparing the contents of the registers (291, 293, 294, 296) and validating the transfer of data when there is sufficient matching between the contours of at least two registers (291, 293, 294, 296).

4. System according to calim 1, characterized in that, upon transmission, the blocks of compressed data are transmitted successively in the first and last thirds of each useful transmission step, the central third of a given step transmitting binary element by binary element the sum modulo 2 of the data blocks transmitted in the last third of the preceding step and in the first third of the following step, respectively, the redundancy being equal to 1.5; and in that, upon reception, a given step is validated when the sum modulo 2 of the demodulated data transmitted in the last third of the preceding step and in the first third of the following step match with the demodulated data transmitted in the central third of the given step.

Fig.1

Fig.2

Fig.3

Fig.5

Fig.4